Europäisches Patentamt

European Patent Office

Office européen des brevets

(19)

(11) Numéro de publication: **0 077 245
B1**

# (12) FASCICULE DE BREVET EUROPEEN

(45) Date de publication du fascicule du brevet:
21.11.84

(21) Numéro de dépôt: 82401782.6

(22) Date de dépôt: 30.09.82

(51) Int. Cl.³: **B 25 J 5/00**

(54) **Télé-manipulateur d'Intervention dans une boîte à eau de générateur de vapeur.**

(30) Priorité: 05.10.81 FR 8118669

(43) Date de publication de la demande:
20.04.83 Bulletin 83/16

(45) Mention de la délivrance du brevet:
21.11.84 Bulletin 84/47

(84) Etats contractants désignés:
BE CH DE FR GB IT LI SE

(56) Documents cités:
EP - A - 0 020 272
EP - A - 0 045 454
DE - A - 2 912 658
FR - A - 2 431 109
US - A - 3 247 979
US - A - 4 018 345

(73) Titulaire: **FRAMATOME ET CIE., Tour Fiat 1, Place de la Coupole, F-92400 Courbevoie (FR)**

(72) Inventeur: **Clar, Georges, 4 avenue Vergin, F-69006 Lyon (FR)**
Inventeur: **Lebouc, Bernard, 5 place des Reflets, F-92400 Courbevoie (FR)**

(74) Mandataire: **Dupuy, Louis et al, CREUSOT-LOIRE 15 rue Pasquier, F-75383 Paris Cedex 8 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

BUNDESDRUCKEREI BERLIN

## Description

La présente invention concerne un télé-manipulateur plus particulièrement destiné à supporter et à déplacer les outils nécessaires à des interventions à l'intérieur d'une boite à eau d'un générateur de vapeur dans une centrale nucléaire à eau pressurisée.

Dans une centrale nucléaire à eau pressurisée, les très nombreux tubes des faisceaux tubulaires des générateurs de vapeur doivent faire l'objet d'opérations périodiques de vérification et de maintenance, comme par exemple des opérations de soudage, de mise en place de bouchons d'obturation pour neutraliser des tubes défectueux, ou d'interventions sur le revêtement intérieur des tubes. Ces opérations de maintenance doivent se faire à partir de la boite à eau, c'est à dire en domaine fortement radio-actif; il est donc nécessaire d'utiliser des appareils télécommandés pour limiter les interventions humaines à la simple mise en place du matériel. En outre les générateurs de vapeur sont généralement à tubes verticaux, c'est à dire que la plaque tubulaire est alors »au plafond« de la boite à eau.

On peut également être amené à devoir intervenir sur les parois internes de la boite à eau, par exemple pour vérifier leur état de surface.

On a déjà réalisé des appareils capables d'être déplacés par télécommande sous la plaque tubulaire d'un générateur de vapeur. Les brevets français publiés sous les numéros 2.309.314 ou 2.457.741 décrivent de tels appareils comportant deux bras perpendiculaires munis chacun, à chacune de ses extrémités, d'une pince expansible pouvant s'engager dans les orifices de la plaque tubulaire. Par des jeux de chariots et de vérins on peut donner indépendamment à chaque bras des mouvements perpendiculaires à la plaque pour engager les pinces dans les orifices ou les en dégager, et des mouvements pas à pas parallèles à la plaque, permettant ainsi le déplacement autonome de l'appareil par »reptation« sous la plaque. Pendant les mouvements l'appareil reste toujours suspendu par au moins deux pinces, et par quatre pinces en position de travail.

De tels appareils présentent cepedant l'inconvénient d'un encombrement général assez important. Mais surtout, lorsqu'un appareil est en position de travail suspendu à ses quatre pinces, il ne permet d'opérer que sur un nombre très limité d'orifices de la plaque. Dans la version du brevet 2.309.314, prévu simplement pour des guides de sondes de contrôle, seuls quatre tubes sont accessibles; dans la version du brevet 2.457.741, qui permet d'utiliser des outils plus complexes comme des têtes de soudage par exemple, un seul orifice de la plaque est dans le champ d'action de l'outil qui ne peut se déplacer que dans un dièdre laissé libre par les bras supports. Ceci est assez gênant chaque fois qu'il faut effectuer la même opération sur une série d'orifices dans la même zone de la plaque, car pour chaque changement d'orifice il faut alors déplacer le porte-outil, c'est à dire dégager un bras, le déplacer d'un pas, et l'engager à nouveau dans la plaque, et répéter les trois opérations sur l'autre bras, si bien que la durée des temps de déplacement, qui sont des temps morts, vient à dépasser les temps efficaces d'intervention.

Par ailleurs chaque mouvement comporte des phases durant lesquelles le porte-outil reste suspendu à seulement deux pinces, ce qui limite beaucoup le poids des outils utilisables.

On notera encore que ces appareils ne permettent de travailler que sous la plaque tubulaire elle-même, alors que des interventions peuvent aussi être nécessaires sur les parois intérieures de la boite à eau.

Enfin, bien que par exemple sur l'appareil décrit au brevet 2.457.741 on ait pu prévoir une tourelle pour recevoir en attente des outils différents, ceci n'est pratiquement possible que pour de petits outils en raison de la charge limite supportable par deux pinces; en pratique il se révèle fréquemment nécessaire de changer les outils sur le porte-outil, ce qui oblige à multiplier les entrées dans la boite à eau c'est à dire en une zone fortement radio-active.

La présente invention permet de disposer d'un appareil télé-manipulateur, à la fois de plus grande capacité et plus performant, tout en réduisant les interventions du personnel en milieu radio-actif.

L'invention concerne donc un télé-manipulateur d'intervention dans une boite à eau de générateur de vapeur, destiné à venir se fixer sous la plaque tubulaire du générateur, l'appareil étant du type comportant des pinces expansibles pour s'engager et se bloquer à la demande dans des orifices de la plaque tubulaire, montées sur des bras portés par un bloc porteur, avec des moyens pour donner indépendamment à chaque bras, d'une part des mouvements perpendiculaires à la plaque pour engager des pinces dans les orifices ou les en dégager, et d'autre part des mouvements pas à pas parallèles à la plaque, permettant ainsi le déplacement autonome de l'appareil sous la plaque tubulaire en y restant toujours suspendu par au moins deux pinces.

Selon l'invention le bloc porteur supporte quatre bras indépendants munis chacun de deux pinces expansibles, et à sa partie opposée à la plaque tubulaire le bloc porteur supporte un bras à plusieurs éléments articulés entre eux, l'élément extrême du bras étant muni de moyens de fixation d'outils, et l'ensemble du bras étant lui-même orientable autor de l'axe du bloc perpendiculaire à la plaque tubulaire; l'appareil comporte des moyens télécommandés pour règler et maintenir la position angulaire du bras par rapport au bloc porteur, et la position angulaire relative entre eux de chacun des éléments du bras.

Selon une forme particulière de réalisation de l'invention, le bloc porteur est constitué par un bâti tubulaire avec des barres guides régulièrement réparties par groupes de 2 autour de son axe, chaque bras étant constitué par un chariot engagé sur chaque paire de barres, les pinces étant elles-mêmes portées par un coulisseau déplaçable sur le chariot perpendiculairement aux barres guides.

L'invention sera mieux comprise en se référant à un mode de réalisation particulier donné à titre et représenté par les dessins annexés.

La figure 1 est une vue en perspective de l'ensemble de l'appareil isolé.

La figure 2, sur laquelle on n'a représenté qu'un seul bras de fixation, donne le détail du montage de ce bras, mobile sur son chariot de déplacement perpendiculairement à la plaque.

La figure 3 montre les moyens utilisés pour le déplacement du chariot.

La figure 4 montre le champ d'action de l'appareil dans l'ensemble de la boite à eau, à partir d'une position fixe sous la plaque tubulaire.

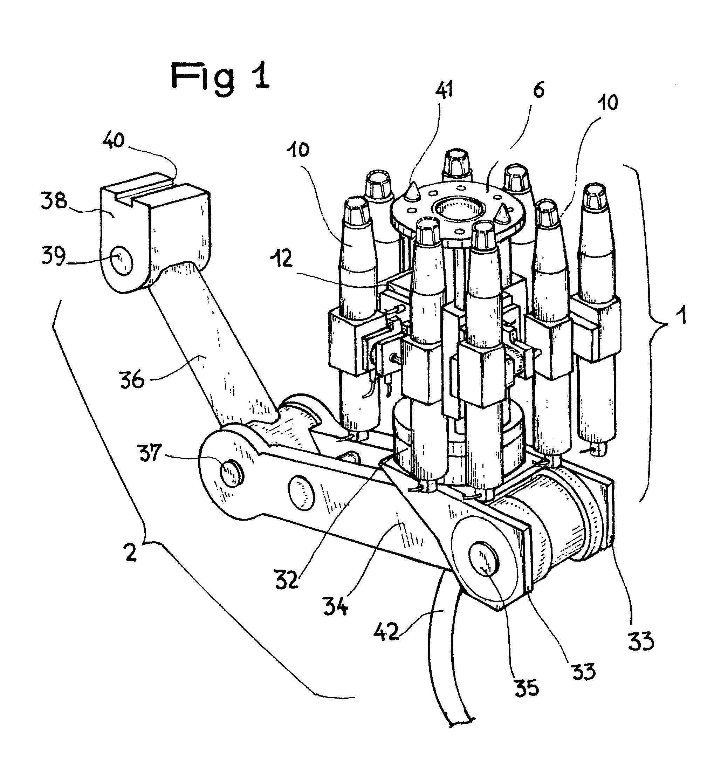

En se référant tout d'abord à la figure 1, on verra que l'appareil comporte un bloc porteur globalement désigné par 1, et muni de pinces d'accrochage 10 et de moyens de déplacement de ces pinces pour assurer le déplacement de l'appareil sous la plaque tubulaire. Le bloc 1 soutient un manipulateur articulé 2 qui constitue le porte-outil proprement dit.

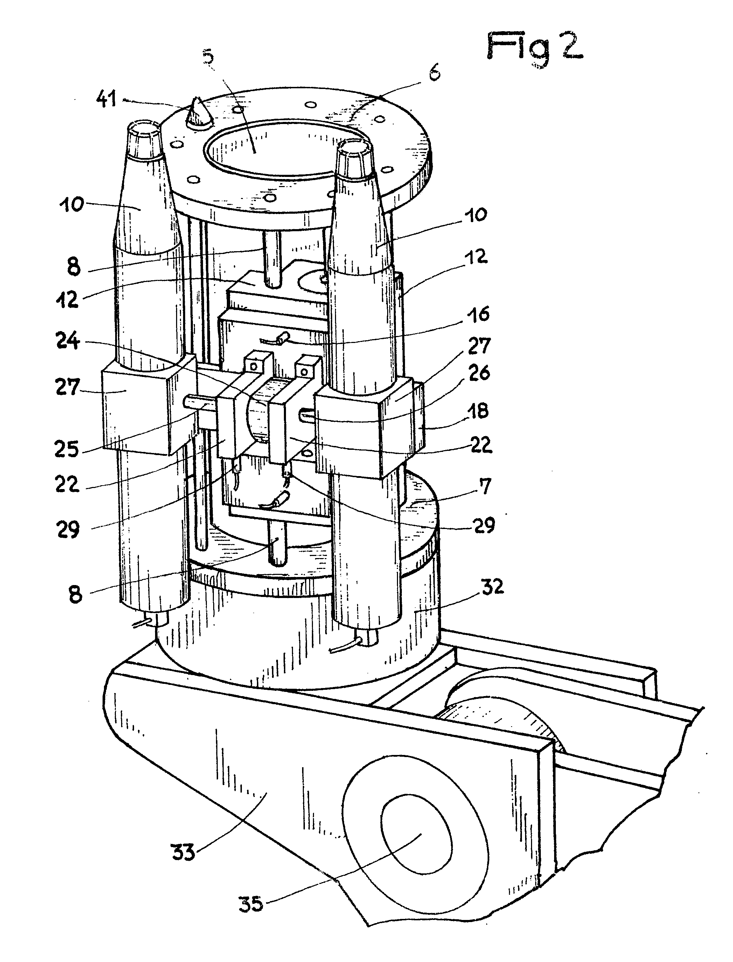

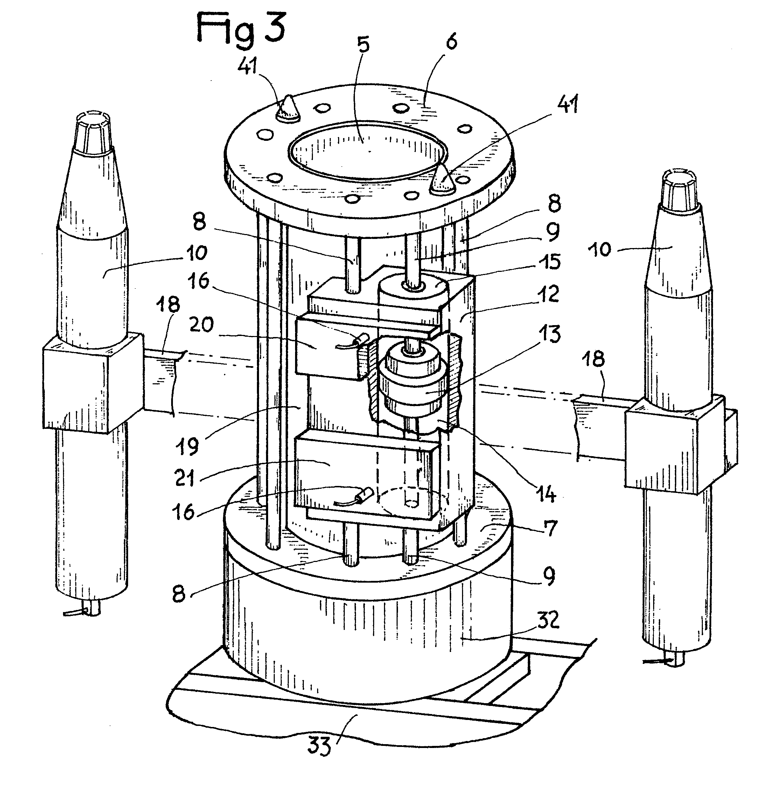

Le bloc porteur 1, plus visible sur les figures 2 et 3, est ici constitué par un bâti tubulaire 5 portant à ses extrémités deux flasques annulaires 6 et 7. Les flasques 6 et 7 sont également reliés par huit barres de guidages 8—9 régulièrement réparties par groupes de deux autour du bâti 5. L'appareil est muni de huit pinces expansibles d'accrochage 10, de type usuel et à sécurité positive, c'est à dire que leur extrémité expansible est normalement en position expansée, donc en position de serrage et d'accrochage lorsqu'elle est engagée dans un des orifices de la plaque. C'est par l'action commandée du vérin incorporé, pneumatique ou électrique, que la partie expansible peut être rétractée pour décrocher la pince; en cas de perte d'alimentation pneumatique ou électrique l'appareil restera donc accroché à la plaque. Une description plus complète de telles pinces expansibles pourra être trouvée dans la brevet français déjà cité 2.309.314.

Le bloc 1 comporte quatre ensembles, ou bras, identiques tels que représentés aux figures 2 et 3. Chaque bras porte donc deux pinces 10 et est associé à une paire de barres 8—9.

Le bras comporte un chariot coulissant 12 qui peut être déplacé le long des barres 8—9, c'est à dire perpendiculairement à la plaque tubulaire lorsque l'appareil est en place. Le coulisseau 12 est simplement engagé sur la barre 8 qui n'a qu'un rôle de guidage. Par contre la barre 9 constitue la tige de part et d'autre d'un piston fixe 13 qui coulisse en mouvement relatif dans un alésage 14 du coulisseau 12. L'alésage 14 est fermé à chaque extrémité par un fond 15, traversé par la barre 9, de sorte que l'on a ainsi constitué un vérin à double effet à piston fixe, et dont le corps mobile est le coulisseau 12 lui-même. Les raccords 16 permettent l'alimentation de l'une ou l'autre chambre du vérin, et par conséquent le déplacement parallèle du coulisseau le long des barres 8 et 9.

Les deux pinces 10 sont fixées aux extrémités d'une traverse entretoise 18 qui coulisse dans une glissière 19 formée sur la face avant du coulisseau 12, par l'espace libre entre deux plaques 20—21 solidaires du coulisseau 12. La traverse 18 est maintenue prisonnière dans la glissière 19 par les deux supports 22 fixés sur les plaques 20, 21 et qui enjambent la traverse 18 sans gêner son déplacement transversal.

Chaque support 22 forme également un des deux fonds d'un vérin à double effet dont le corps 24 renferme un piston à deux tiges 25, 26 qui traversent les supports 22. La longueur totale de l'ensemble du piston et de ses tiges 25—26 est égale à la distance intérieure entre les supports 27 des pinces 10, de sorte que les extrémités des tiges 25 et 26 sont toujours au contact des deux supports 27. Les raccords 29 permettent l'alimentation de l'une ou l'autre chambre du vérin 24, ce qui entraine le déplacement transversal de l'ensemble de la traverse 18 et des deux pinces 10 qu'elle supporte. La course totale du vérin 24 est égale à un pas d'implantation des tubes sur la plaque tubulaire, tandis que bien entendu l'entraxe entre les deux pinces 10 est égal à un multiple entier de ce pas.

Le flasque inférieur 7 supporte une couronne rotative 32 sous laquelle pivote l'ensemble du bras porte outil 2, autour de l'axe du bâti tubulaire 5. Le bras 2 comporte un premier élément 33 formant une chape déportée par rapport à l'axe de rotation de la couronne 32. Un deuxième élément 34 est articulé en 35 sur 33. Un troisième élément 36 est de la même façon articulé en 37 sur l'autre extrémité de 34. Enfin un coulisseau porteoutil 38 est articulé en 39 à l'autre extrémité de 36. Le coulisseau 38 est équipé de moyens usuels de saisie et de maintien d'outils, moyens qui sont ici (figure 1) simplement symbolisés par une rainure 40.

Les axes des articulations 35, 37 et 39 sont parallèles entre eux et perpendiculaires à l'axe du bâti 5. Chaque articulation, aussi bien les articulations 35, 37 et 39 que celle de la chape 33 sur la couronne 32, est équipée d'un moteur interne de positionnement angulaire permettant, par un système usuel maitre-esclave, à chaque élément du bras 2 de reproduire par télécommande les déplacements des éléments homologues d'un bras manœuvré sur une réplique par un opérateur extérieur. La gaine 42 regroupe tous les circuits de cette télécommande.

On voit qu'on a ainsi réalisé un appareil particulièrement compact, grâce en particulier au vérin interne pour le déplacement de chaque coulisseau 12. Malgré la présence de huit pinces d'accrochage, qui permettent de supporter une lourde charge d'outils, l'appareil asse quand même sans difficulté par le trou d'homme d'accès à l'intérieur de la boite à eau. Bien entendu, lors de l'introduction de l'appareil dans la boite à eau le bras articulé est déployé, si bien que l'encombrement maximal transversal de l'ensemble est l'encombrement diamétral sur les pinces 10, encombrement inférieur au diamètre du trou d'homme.

La mise en place de l'appareil en suspension sous la plaque tubulaire se fait de la même façon que pour les appareils antérieurs, avec centrage par les pions 41 du flasque supérieur qui viennent s'engager dans deux orifices de la plaque, puis engagement de l'ensemble des huit pinces dans d'autres orifices pour assurer l'accrochage à la plaque.

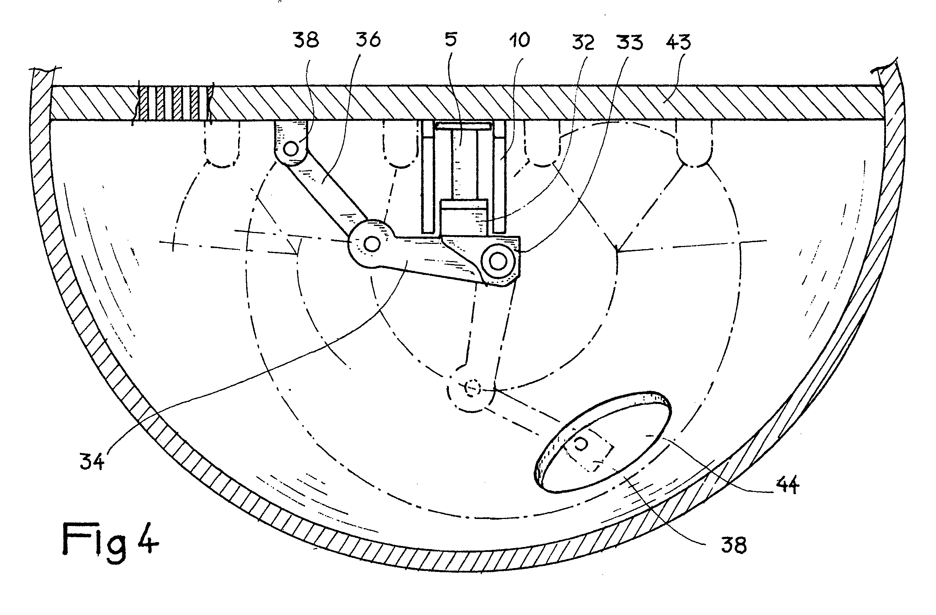

Lorsque l'appareil est en place sous la plaque tubulaire 43, on voit sur la figure 4 l'importance de la zone accessible pour le porte outil 38 sans avoir à déplacer l'appareil, et simplement en faisant varier l'orientation relative des éléments 34 et 36 et l'orientation de la chape 33 par rapport à la couronne 32. La zone balayable par le porte outil 38 représente ici près de la moitié de la surface de la plaque tubulaire. Mais en outre le porte outil 38 peut également être amené au voisinage de toute une partie des parois internes de la boite à eau, qu'il s'agisse de la partie sphérique ou bien de la surface plane de la closison de séparation entre la boite à eau chaude et la boite à eau froide. Le porte outil 38 peut aussi être amené jusqu'au trou d'homme 44 pour recevoir un nouvel outil.

Bien entendu si l'on veut ensuite déplacer l'appareil vers un autre emplacement de la plaque tubulaire on procèdera comme avec les appareils antérieurs, en dégageant deux groupes de pinces opposés, en les déplaçant d'un pas dans le même sens pour les engager dans quatre orifices différents, puis on déplacera le bâti en mouvement relatif après avoir dégagé les quatre autres pinces qui seront ensuite elles aussi engagées à nouveau dans des orifices différents. On pourra noter que dans une telle manoeuvre l'appareil reste toujours suspendu à un minimum de quatre pinces, ce qui double sa capacité de charge par rapport aux appareils antérieurs.

L'appareil se prête particulièrement bien à de opérations répétitives, comme par exemple l'obturation systématique des tubes d'une zone défectueuse. On peut alors, au moyen du bras manipulateur 2 venir prendre les bouchons les unes après les autres par le trou 44 après avoir posé le précédent, et sans avoir à déplacer le bloc porteur 1 entre chaque opération.

**Revendication**

1. Télémanipulateur d'intervention dans une boite à eau de générateur de vapeur, et destiné à venir se fixer sous la plaque tubulaire du générateur, du type comportant des pinces expansibles (10) pour s'engager et se bloquer à la demande dans des orifices de la plaque tubulaire, montées sur des bras (12) portés parun bloc porteur (1), avec des moyens (13, 24) pour donner indépendamment à chaque bras d'une part des mouvements perpendiculaires à la plaque pour engager les pinces dans les orifices ou les en dégager, et d'autre part des mouvements pas à pas parallèles à la plaque, permettant ainsi le déplacement autonome de l'appareil sous la plaque tubulaire en y restant toujours suspendu par au moins deux pinces (10), caractérisé par le fait que le bloc porteur (1) supporte quatre bras (12) indépendants munis chacun de deux pinces expansibles, et par le fait qu'à sa partie opposée à la plaque tubulaire le bloc porteur supporte un bras porte-outil (2) à plusieurs éléments (34, 36) articulés entre eux, l'élément extrême (36) du bras porte-outil (2) étant muni de moyens de fixation d'outils (38), l'ensemble du bras porte-outil étant lui-même orientable autour de l'axe du bloc perpendiculaire à la plaque tubulaire, avec des moyens télécommandés pour régler et maintenir la position angulaire du bras porte-outil par rapport au bloc porteur et la position angulaire relative entre eux de chacun des éléments du bras porte-outil.

2. Télémanipulateur selon revendication 1, caractérisé par le fait que le bloc porteur (1) est constitué par un bâti tubulaire avec des barres guides (8, 9) régulièrement réparties par groupes de deux autour de son axe, chaque bras étant constitué parun chariot (12) engagé sur chaque paire de barres (8, 9), les pinces (10) étant elles-mêmes portées par un coulisseau (18) déplaçable sur le chariot (12) perpendiculairement aux barres guides (8, 9).

3. Télémanipulateur selon revendication 2, caractérisé par le fait que, pour chariot (12), l'une des deux barres guides (8, 9) constitue la tige fixe du piston (13) d'un vérin à double effet dont le corps est constitué par le chariot lui-même, le vérin ainsi constitué étant utilisé pour le déplacement de chaque bras perpendiculairement à la plaque tubulaire.

**Patentansprüche**

1. Fernbedienungsgerät zum Einsatz in einer Wasserkammer eines Dampferzeugers, der unter der Dampferzeuger-Rohrplatte zur Befestigung kommt, bestehend aus in Öffnungen der Rohrplatte nach Bedarf einführbaren und blokkierbaren Spreizhaken (10), die an auf einer Trageinheit (1) angeordneten Armen (12) befestigt sind, mit Mitteln (13, 24) zur unabhängigen Bewegung des jeweiligen Arms senkrecht zur Platte einerseits zwecks Einführen oder Lösen der Haken in den Öffnungen und zur schrittweisen Bewegung parallel zur Platte anderseits um somit das Gerät unter der Rohrplatte unabhängig verfahren zu können, wobei dessen Aufhängung mindestens über zwei Haken (10) weiterhin gewährleistet ist, dadurch gekennzeichnet, daß vier unabhängige Arme (12) mit jeweils zwei Spreizhaken auf der Trageinheit (1) angeordnet sind, und daß dessen der Rohrplatte entgegengesetztes Teil die Trageinheit einen Werkzeughalterarm (2) aus mehreren Gelenkelementen (34, 36) aufweist — das äußerste Element (36) des Werkzeughalterarms (2) umfaßt Befestigungsmittel für Werkzeuge (38) — wobei der Werkzeughalterarm selbst um die zur Rohrplatte senkrechte Achse der Trageinheit schwenkbar ist, und wobei zum Einstellen und Halten der Winkelstellung des Werkzeughalterarms zur Trageinheit sowie der relativen Winkelstellung der jeweiligen Werkzeughalterarmelemente untereinander das Gerät ferngesteuerte Mittel umfaßt.

2. Fernbedienungsgerät nach Anspruch 1, dadurch gekennzeichnet, daß die Trageinheit (1) aus einem Rohrständer mit regelmäßig um dessen Achse paarweise verteilten Leitstangen (8, 9) besteht, wobei jeder Arm aus einem über das jeweilige Paar Stangen (8, 9) geführten Wagen (12) gebildet ist, und wobei die Haken (10) auf einem auf dem Wagen (12) senkrecht zu den Leitstangen (8, 9) verfahrbaren Schlitten (18) angeordnet sind.

3. Fernbedienungsgerät nach Anspruch 2, dadurch gekennzeichnet, daß eine der beiden Leitstangen (8, 9) für jeden Wagen (12) als feststehende Stange des Kolbens (13) eines doppeltwirkenden Zylinders ausgebildet ist, dessen Gehäuse den Wagen bildet, wobei der somit gebildete Zylinder zum Verfahren des jeweiligen Arms senkrecht zur Rohrplatte dient.

## Claims

1. Remote handling device for operating inside a water box of a steam generator, and intended to be fixed under the tube plate of the generator, of the type comprising claws (10) which can be expanded to engage and lock when required in the orifices of the tube plate and are fitted on arms (12) carried by a carrier block (1), with means (13, 24) for endowing each arm separately with, on the one hand, movements perpendicular to the plate to engage the claws in the orifices or to disengage them therefrom and, on the other hand, stepwise movements parallel to the plate, thereby permitting the apparatus to travel independently under the tube plate while it still continues to be suspended from it by at least two claws (10), characterised in that the carrier block (1) supports four independent arms (12), each equipped with two expandable claws, and in that, in its part facing the tube plate, the carrier block supports a toool-holder arm (2) having several components (34, 36) articulated together, the outermost component (36) of the tool-holder arm (2) being provided with means for fixing tools (38), the tool-holder arm unit being itself capable of being swivelled round the axis of the block which is perpendicular to the tube plate, with remotely controlled means for regulating and maintaining the angular position of the tool-holder arm relative to the carrier block and the mutual angular position of each of the components of the tool-holder arm.

2. Remote handling device according to Claim 1, characterised in that the carrier block (1) consists of a tubular framework with guide bars (8, 9) distributed regularly in pairs around its axis, each arm consisting of a trolley (12) engaged on each pair of bars (8, 9), the claws (10) being themselves carried by a slide (18) capable of travelling on the trolley (12) at right angles to the guide bars (8, 9).

3. Remote handling device according to Claim 2, characterised in that, for each trolley (12), one of the two guide bars (8, 9) forms the fixed rod of the piston (13) of a double-acting jack the body of which is formed by the trolley itself, the jack thus formed being employed for moving each arm at right angles to the tube plate.

# Fig 1

Fig 2

Fig 3

Fig 4

38    36    5    10    32  33  43

34

44

38